Europäisches Patentamt

European Patent Office

Office européen des brevets

(19)

(11) **EP 0 564 035 B1**

(12) **FASCICULE DE BREVET EUROPEEN**

| | |
|---|---|
| (45) Date de publication et mention de la délivrance du brevet: **27.12.1996 Bulletin 1996/52** | (51) Int Cl.6: **C08L 51/00**, C08L 27/06, C08K 9/04 // (C08L51/00, 51:00, 27:06), (C08L27/06, 51:00, 51:00) |
| (21) Numéro de dépôt: **93200876.6** | |
| (22) Date de dépôt: **26.03.1993** | |

(54) **Compositions résistantes aux chocs à base de polymères du chlorure de vinyle et leur utilisation**

Schlagzähe Zusammensetzungen auf der Basis von Vinylchloridpolymerisaten und ihre Verwendung

Shock-resistant compositions based on vinylchloride polymeres and their use

| | |
|---|---|
| (84) Etats contractants désignés: **AT BE CH DE DK ES FR GB GR IE IT LI NL PT SE** | (72) Inventeur: **Gloesener, Daniel B-5380 Sart d'Avril-Fernelmont (BE)** |
| (30) Priorité: **02.04.1992 BE 9200311** | (74) Mandataire: **Marckx, Frieda et al Solvay S.A. Département de la Propriété Industrielle 310, rue de Ransbeek 1120 Bruxelles (BE)** |
| (43) Date de publication de la demande: **06.10.1993 Bulletin 1993/40** | |
| (73) Titulaire: **SOLVAY (Société Anonyme) B-1050 Bruxelles (BE)** | (56) Documents cités: **EP-A- 0 377 149     DD-A- 251 761 FR-A- 2 319 665** |

**Description**

La présente invention concerne des compositions résistant aux chocs à base de polymères du chlorure de vinyle et leur utilisation. Elle concerne plus particulièrement des compositions à base de polymères du chlorure de vinyle comprenant des polymères du chlorure de vinyle greffés sur des polymères renforçants, ainsi que l'utilisation de ces compositions pour l'extrusion de profilés.

Il est bien connu de recourir pour l'extrusion de profilés en polychlorure de vinyle, tels que des profilés pour châssis à usage extérieur, à des compositions comprenant des polymères renforçants, généralement de nature élastomérique, tels que, par exemple, des polymères d'acrylates d'alkyles ou encore des copolymères d'éthylène et d'acétate de vinyle. Ces compositions sont obtenues soit par mélange externe de polychlorure de vinyle avec des polymères renforçants du type précité, soit par utilisation de polychlorure de vinyle modifié "in situ" par polymérisation avec greffage de chlorure de vinyle sur de tels polymères renforçants soit encore par mélange externe de polychlorure de vinyle modifié avec des polymères renforçants. Quel que soit le mode d'incorporation des polymères renforçants, les compositions à base de polychlorure de vinyle spécifiquement recommandées pour l'extrusion de profilés pour châssis à usage extérieur comprennent généralement de 6 à 10 parties en poids environ de polymère renforçant pour 100 parties en poids du total des constituants polymériques de la composition, ainsi que quelques pourcents de carbonate de calcium à fines particules enrobées. De telles compositions permettent habituellement de satisfaire aux marques de qualité pour châssis de fenêtres imposées dans certains pays, telles que par exemple la marque de qualité allemande RAL imposant une résilience avec simple entaille en U sur plaque pressée de 4 mm d'épaisseur (selon la norme DIN 53453) supérieure à 20 kJ/m$^2$ et une résilience avec double entaille en V ( selon la norme DIN 53753) supérieure à 40 kJ/m$^2$. Néanmoins, les polymères renforçants contribuent généralement à réduire la résistance au vieillissement et la rigidité des compositions à base de polychlorure de vinyle auxquelles ils sont incorporés.

La présente invention a pour but de procurer des compositions résistant aux chocs à base de polymères du chlorure de vinyle d'une efficacité supérieure permettant d'atteindre des performances au moins équivalentes sur le plan de la résistance aux chocs à moindre teneur globale en polymères renforçants et qui ne présentent pas, dès lors, l'inconvénient précité des compositions connues.

A cet effet, la présente invention concerne des compositions résistant aux chocs à base de polymères du chlorure de vinyle, caractérisées en ce qu'elles comprennent à titre de polymères du chlorure de vinyle :

(a) de 3 à 40 parties de copolymère greffé de chlorure de vinyle sur du polyacrylate de butyle faiblement réticulé contenant de 12 à 45 % en poids de polyacrylate de butyle faiblement réticulé obtenu par mise en oeuvre à la polymérisation d'au moins 0,2 % et de pas plus de 3 % en poids par rapport à l'acrylate de butyle d'un comonomère comprenant plusieurs insaturations éthyléniques,

(b) de 5 à 85 parties de copolymère greffé de chlorure de vinyle sur un copolymère d'éthylène et d'acétate de vinyle contenant de 0,5 à 7 % en poids de copolymère d'éthylène et d'acétate de vinyle contenant de 50 à 80 % en poids d'éthylène et dont la viscosité intrinsèque, mesurée à 20°C dans le m-xylène, est comprise entre 0,05 et 0,10 l/g,

c) de 10 à 85 parties de polymère non modifié du chlorure de vinyle

pour 100 parties en poids au total de l'ensemble des polymères du chlorure de vinyle de la composition, et, à titre de charge renforçante :

(d) de 3 à 10 parties de carbonate de calcium dont les particules élémentaires enrobées ont un diamètre moyen inférieur à 1 μm pour 100 parties en poids de l'ensemble des polymères du chlorure de vinyle de la composition.

Les copolymères greffés de chlorure de vinyle sur du polyacrylate de butyle faiblement réticulé, ci-après désignés par le vocable "polymères (a)", ainsi que les copolymères greffés de chlorure de vinyle sur un copolymère d'éthylène et d'acétate de vinyle, ci-après désignés par le vocable "polymères (b)", constituent des polymères connus en tant que tels.

Comme défini ci-dessus, on entend désigner par polyacrylate de butyle faiblement réticulé, les polyacrylates de butyle obtenus par mise en oeuvre à la polymérisation de l'acrylate de butyle d'au moins 0,2 % et de pas plus de 3 % en poids, par rapport à l'acrylate de butyle, d'un comonomère comprenant plusieurs insaturations éthyléniques. A titre d'exemples de tels comonomères réticulants, on peut signaler le phtalate de diallyle et le maléate de diallyle. Le plus souvent, la quantité de comonomère réticulant mise en oeuvre est comprise entre environ 0,5 et 1,5 % en poids. Un mode de fabrication avantageux et préféré des polymères (a) consiste à greffer le chlorure de vinyle en émulsion aqueuse sur un latex de polyacrylate de butyle réticulé, tel que décrit par exemple dans le brevet FR-A-1 431 547 (THE GENERAL TIRE & RUBBER C0) incorporé ici à titre de référence.

Les polymères (a) auxquels on donne la préférence contiennent de 25 à 40 % en poids de polyacrylate de butyle faiblement réticulé.

Un mode de fabrication avantageux et préféré des polymères (b) qui consiste à prédisperser le copolymère d'éthylène et d'acétate de vinyle contenant de 50 à 80 % en poids d'éthylène dans le chlorure de vinyle en présence d'eau avant de soumettre ce dernier à une polymérisation en suspension aqueuse est décrit dans la demande de brevet EP-A-0 074 139 (SOLVAY & Cie), également incorporée ici à titre de référence.

Les polymères (b) auxquels on donne la préférence contiennent de 1,5 à 5 % en poids de copolymère d'éthylène et d'acétate de vinyle.

Par polymère non modifié du chlorure de vinyle, ci-après désigné par le vocable "polymère (c)", on entend désigner les polymères du chlorure de vinyle ne contenant pas de polymère renforçant. Les polymères (c) auxquels on donne la préférence sont constitués d'homopolymères du chlorure de vinyle. A titre d'exemples de pareils homopolymères, on peut mentionner les homopolymères du chlorure de vinyle obtenus par polymérisation en suspension aqueuse présentant un nombre K (mesuré à 25°C dans la cyclohexanone à raison de 5g/l) allant de 60 à 70 et plus particulièrement de 64 à 70, ainsi que les homopolymères du chlorure de vinyle obtenus par polymérisation en émulsion aqueuse présentant un nombre K allant de 68 à 80, plus particulièrement encore de 72 à 76. Des polymères (c) qui sont tout particulièrement préférés sont les homopolymères du chlorure de vinyle obtenus par polymérisation en émulsion aqueuse ayant un nombre K (mesuré dans les conditions précitées) allant de 72 à 76.

Par carbonate de calcium dont les particules élémentaires sont enrobées, on entend désigner les carbonates de calcium dont les particules sont enrobées au moyen d'un composé organique (agent enrobant) améliorant la dispersion du carbonate de calcium dans les polymères du chlorure de vinyle. A titres d'exemples non limitatifs de composés organiques usuellement utilisés à titre d'agents enrobants, on peut mentionner les acides gras carboxyliques, tels que les acides gras contenant de 10 à 24 atomes de carbone et, de préférence, de 12 à 22 atomes de carbone et leurs mélanges, les acides gras sulfoniques, tels que l'acide dodécylbenzènesulfonique, et les phosphates et les titanates organiques à longues chaînes alkyles. L'agent enrobant le plus couramment utilisé est constitué ou comprend à titre de constituants essentiels des acides gras carboxyliques tels que l'acide stéarique ou les mélanges d'acides stéarique et palmitique.

On donne, par ailleurs, la préférence aux carbonates de calcium, naturels ou précipités, dont les particules élémentaires ont un diamètre moyen compris entre 0,02 et 0,5 µm et, plus particulièrement entre 0,05 et 0,3 µm.

Un aspect surprenant des compositions selon l'invention réside dans le fait que pour des teneurs globales identiques en agents renforçants, elles procurent des résiliences sur éprouvettes entaillées très largement supérieures à celles de compositions contenant exclusivement du polyacrylate de butyle à titre d'agent renforçant. Les compositions selon l'invention sont par ailleurs plus faciles à mettre en oeuvre et présentent une soudabilité (mesurée par le biais de la résistance en traction statique d'assemblages soudés) peu sensible aux variations de la température de soudage.

Des compositions selon l'invention qui sont préférées comprennent à titre de polymères du chlorure de vinyle :

(a) de 5 à 25 parties de copolymère greffé de chlorure de vinyle sur du polyacrylate de butyle faiblement réticulé,
(b) de 30 à 75 parties de copolymère greffé de chlorure de vinyle
sur un copolymère d'éthylène et d'acétate de vinyle,
(c) de 20 à 50 parties de polymère non modifié du chlorure de vinyle
pour 100 parties en poids au total de l'ensemble des polymères du chlorure de vinyle de la composition et, à titre de charge renforçante,
(d) de 5 à 8 parties de carbonate de calcium pour 100 parties en poids de l'ensemble des polymères du chlorure de vinyle de la composition.

Suivant un autre aspect préféré de l'invention, la somme des teneurs en polyacrylate de butyle faiblement réticulé et en copolymère d'éthylène et d'acétate de vinyle des compositions est inférieure à 6 parties et, par ailleurs, supérieure à 2 parties pour 100 parties en poids au total de l'ensemble des polymères du chlorure de vinyle de la composition. Des compositions particulièrement préférées sont celles dont la teneur en polyacrylate de butyle faiblement réticulé s'élève à 1,5 partie au moins et la teneur en copolymère d'éthylène et d'acétate de vinyle à 0,25 partie au moins, la somme des teneurs en polyacrylate de butyle faiblement réticulé et en copolymère d'éthylène et d'acétate de vinyle ne dépassant pas 4,5 parties en poids pour 100 parties en poids au total de l'ensemble des polymères du chlorure de vinyle de la composition.

Outre les polymères du chlorure de vinyle et la charge renforçante caractéristiques décrits ci-dessus, les compositions selon l'invention peuvent contenir tous les ingrédients usuels utilisés dans les compositions à base de polymères du chlorure de vinyle, tels que des stabilisants thermiques, des agents facilitant la mise en oeuvre, des lubrifiants, des pigments etc. Les compositions selon l'invention peuvent être mises en oeuvre sous la forme de poudres ou de granules, la préférence étant donnée à ces derniers.

Les compositions selon l'invention conviennent particulièrement pour l'extrusion de profilés, plus particulièrement encore de profilés pour châssis à usage extérieur. L'utilisation des compositions selon l'invention pour l'extrusion de profilés, plus particulièrement encore de profilés pour châssis à usage extérieur, constitue un autre aspect de la présente invention.

Les exemples qui suivent sont destinés à illustrer l'invention.

Exemples 1 à 3

L'exemple 1 illustre une composition selon l'invention comprenant au total 3,15 parties de polymères renforçants, soit 1,75 partie de polyacrylate de butyle faiblement réticulé (présent sous la forme d'un copolymère greffé de chlorure de vinyle sur un polyacrylate de butyle faiblement réticulé) et 1,4 partie de copolymère d'éthylène et d'acétate de vinyle (présent sous la forme d'un copolymère de chlorure de vinyle greffé sur un copolymère d'éthylène et d'acétate de vinyle).

Les exemples 2R et 3R, donnés à titre comparatif, comprennent exclusivement à titre de polymère renforçant respectivement 3 et 3,9 parties de polyacrylate de butyle faiblement réticulé (présent sous la forme d'un copolymère de chlorure de vinyle greffé sur un polyacrylate de butyle faiblement réticulé).

Le polyacrylate de butyle faiblement réticulé a été obtenu par mise en oeuvre d'environ 1 % en poids de phtalate de diallyle à la polymérisation de l'acrylate de butyle.

Les polymères du chlorure de vinyle mis en oeuvre dans les exemples 1 à 3 sont les suivants :

- polymères (a) :

   - copolymère obtenu par polymérisation en émulsion aqueuse de chlorure de vinyle en présence d'un latex de polyacrylate de butyle faiblement réticulé (tel que précisé ci-dessus) contenant 65 % en poids de polychlorure de vinyle pour 35 % en poids de polyacrylate de butyle faiblement réticulé (exemple 1, selon l'invention).
   - copolymère obtenu par polymérisation en suspension aqueuse de chlorure de vinyle en présence d'un latex de polyacrylate de butyle faiblement réticulé (tel que précisé ci-dessus) contenant 94 % en poids de polychlorure de vinyle et 6 % en poids de polyacrylate faiblement réticulé (exemples 2R et 3R, donnés à titre comparatif).

- polymère (b) : copolymère de nombre K égal à 68 (à 25°C dans la cyclohexanone à raison de 5 g/l) obtenu par polymérisation du chlorure de vinyle en suspension aqueuse sur un copolymère d'éthylène et d'acétate de vinyle contenant 60 % en poids d'éthylène dont la viscosité intrinsèque, mesurée à 20°C dans le m-xylène, s'élève à 0,08 l/g, contenant 98 parties en poids de polychlorure de vinyle pour 2 parties en poids de copolymère d'éthylène et d'acétate de vinyle.
- polymères (c) : homopolymère du chlorure de vinyle obtenu en émulsion aqueuse ayant un nombre K (mesuré à 25°C dans la cyclohexanone à raison de 5g/l) égal à 73 (PVC-E) ou en suspension aqueuse ayant un nombre K (mêmes conditions) égal à 64 (PVC-S).

La charge renforçante (d) est constituée par du carbonate de calcium précipité dont les particules élémentaires ont un diamètre moyen d'environ 0,08 μm et sont enrobées d'acide stéarique.

Les compositions préparées et évaluées sont les suivantes, les teneurs étant exprimées en poids :

| | | Exemple 1 | Exemple 2R | Exemple 3R |
|---|---|---|---|---|
| Constituants polymériques : | | | | |
| Polymères (a) | | 5 | 50 | 65 |
| Polymère (b) | | 70 | | |
| Polymères (c) : | PVC-E | 25 | 10 | 15 |
| | PVC-S | | 40 | 20 |
| Charge renforçante (d) : | | 6,25 | 6,25 | 6,25 |
| Ingrédients de mise en oeuvre : (identiques en nature et en quantités dans les trois exemples) | | | | |
| Phosphite dibasique de plomb | | | | 3,5 |
| Stéarate dibasique de plomb | | | | 1,5 |
| Stéarate de calcium | | | | 0,5 |
| Costabilisant de type phosphite | | | | 0,25 |
| Esters d'acides et d'alcools gras (lubrifiants) | | | | 0,6 |
| Polymère acrylique facilitant la mise en oeuvre | | | | 1 |

(suite)

| | | Exemple 1 | Exemple 2R | Exemple 3R |
|---|---|---|---|---|
| Constituants polymériques : | | | | |
| Oxyde de titane | | | | 4 |

Des prémélanges ont été préparés dans un mélangeur lent, puis gélifiés sur un malaxeur interne pendant 2,5 minutes environ pour être déchargés à 160°C sur un malaxeur à cylindres ; les températures pour les cylindres avant et arrière étant respectivement de 150 et 145°C. Une bande en est prélevée, refroidie dans un bac d'eau, puis passe dans le granulateur.

Au départ des granules ainsi obtenus, on a pressé des plaques dans les conditions reprises dans la norme DIN 7748 pour évaluer la résilience Charpy avec simple entaille en U selon la norme DIN 53453 (éprouvette 50 x 6 x 4 mm).

D'autre part, des profilés ont été extrudés sur machine double-vis à vis coniques à un débit de 120 kg/h avec le profil de températures suivant :

- fourreau          190°C-170°C-150°C
- raccord          160°C
- plaque à trous          165°C
- tête          165°C
- filière          185°C
- conditionnement vis          160°C

La résilience Charpy avec double entaille en V a été évaluée, selon la norme DIN 53753 (rayon d'entaille 0,1 mm), sur des éprouvettes de 3 mm d'épaisseur prélevées dans la face extérieure des profilés.

Sur des éprouvettes prélevées de manière identique, on a évalué la résilience Charpy avec simple entaille en V selon la norme BS 2782 méthode 359 (pour PVC modifié) avec un rayon d'entaille de 0,1 mm tel que spécifié dans la norme BS 7413.

Des profilés ont également été soudés dans les conditions suivantes :

- température du miroir chauffant :          265 et 245°C
- déplacement du profilé contre le miroir :          5,7 mm
- déplacement du profilé lors de l'assemblage :          1,4 mm
- durée de préchauffage des profilés lors de l'avance contre le miroir :          15 s
- durée de préchauffage des profilés à l'arrêt contre le miroir :          20 s
- temps d'application des profilés l'un contre l'autre lors de l'assemblage :          40 s
- longueurs des branches depuis l'angle intérieur des coins soudés :          32 cm
- les bourrelets qui se sont formés lors de la soudure n'ont pas été fraisés.

La qualité des soudures a été évaluée par mesure de la résistance en traction quasi-statique des coins soudés après un conditionnement thermique des profilés pendant 12 heures à 23 degrés dans la salle isotherme où s'est effectuée l'évaluation dont les conditions sont détaillées ci-après :

- placer une des branches du coin soudé munie de contre-cales adaptées à la forme du profilé, verticalement contre le support rigide de la machine de test. Les contre-cales sont telles qu'elles évitent le serrage sur les feuillures. La branche horizontale est en position haute.
- serrer à l'aide d'un piston l'extérieur du coin
- serrer à l'aide de deux autres pistons les faces latérales du coin.
- la machine de test pousse, à l'aide d'un piston à tête circulaire, la branche horizontale du coin, verticalement vers le haut.

  . Vitesse de poussée : 50 mm/min
  . Distance de l'angle intérieur du coin soudé à l'axe de poussée : 30 cm

- l'effort maximal est relevé à la rupture du coin
- les moments d'inertie des profilés sont évalués à l'aide d'une prise de mesure par caméra vidéo et de calcul par un logiciel adapté.

- les tensions de rupture sigma sont calculées à l'aide de la formule suivante :

$$\text{sigma [MPa]} = P \text{ [N] . } d \text{ [mm] . } v \text{ [mm] / } l \text{ [mm}^4]$$

où

P :   effort de rupture
d :   distance du coin intérieur au point de poussée du piston (= 30 cm)
v :   distance de la fibre neutre du profilé à la fibre extrême soumise à traction lors du test
l :   moment d'inertie par rapport à l'axe correspondant à la flexion simple du profilé.

Dans le Tableau I en annexe sont consignés les résultats de l'évaluation des résiliences Charpy, y compris l'écart-type mesuré sur 10 éprouvettes, et de la soudabilité par le biais de la résistance en traction statique des assemblages soudés.

La comparaison des résultats de l'exemple 1 selon l'invention avec ceux des exemples comparatifs 2R et 3R à teneurs globales similaires en agents renforçants montre la supériorité appréciable des compositions selon l'invention sur le plan des résiliences Charpy avec simple entaille en U, avec simple entaille en V et avec double entaille en V, ainsi que de la soudabilité laquelle est pratiquement insensible à une variation de la température de soudage par opposition à celle des compositions évaluées à titre comparatif.

Exemples 4 à 6

Les exemples 4 et 5, selon l'invention, et 6R, donné à titre comparatif, concernent des compositions comprenant toutes au total 4 parties en poids de polymères renforçants.

L'exemple 4 illustre une composition comprenant 2,6 parties de polyacrylate de butyle faiblement réticulé (présent sous la forme d'un copolymère greffé de chlorure de vinyle sur un polyacrylate de butyle faiblement réticulé) et 1,4 partie de copolymère d'éthylène et d'acétate de vinyle (présent sous la forme d'un copolymère de chlorure de vinyle greffé sur un copolymère d'éthylène et d'acétate de vinyle).

L'exemple 5 illustre une composition compenant 2,9 parties de polyacrylate de butyle (présent sous la forme d'un copolymère greffé de chlorure de vinyle sur un polyacrylate de butyle faiblement réticulé) et 1,1 partie de copolymère d'éthylène et d'acétate de vinyle (présent sous la forme d'un copolymère de chlorure de vinyle greffé sur un copolymère d'éthylène et d'acétate de vinyle).

L'exemple 6R illustre une composition contenant 4 parties en poids de polyacrylate de butyle faiblement réticulé (présent sous la forme d'un copolymère greffé de chlorure de vinyle sur un polyacrylate de butyle faiblement réticulé).

Le polyacrylate de butyle faiblement réticulé a été obtenu par mise en oeuvre d'environ 1 % en poids de phtalate de diallyle à la polymérisation de l'acrylate de butyle.

Les polymères du chlorure de vinyle mis en oeuvre dans les exemples 4 à 6 sont les suivants :

- polymères (a) :

  - copolymère obtenu par polymérisation en émulsion aqueuse de chlorure de vinyle en présence d'un latex de polyacrylate de butyle faiblement réticulé (tel que précisé ci-dessus) contenant 73 % en poids de polychlorure de vinyle pour 27 % en poids de polyacrylate de butyle faiblement réticulé (exemple 4 selon l'invention et exemple comparatif 6R)
  - copolymère obtenu par polymérisation en émulsion aqueuse de chlorure de vinyle en présence d'un latex de polyacrylate de butyle faiblement réticulé (tel que précisé ci-dessus) contenant 88 % en poids de polychlorure de vinyle pour 12 % en poids de polyacrylate de butyle faiblement réticulé (exemple 5, selon l'invention)

- polymère (b) : copolymère greffé de chlorure de vinyle sur un copolymère d'éthylène et d'acétate de vinyle en tous points identique au polymère (b) mis en oeuvre à l'exemple 1 selon l'invention.
- polymères (c) :

  - homopolymère du chlorure de vinyle obtenu en émulsion aqueuse ayant un nombre K égal à 73 (PVC-E), identique en tous points à celui mis en oeuvre dans les exemples 1 à 3R (exemples 4, 5 et 6R)
  - homopolymère du chlorure de vinyle obtenu en suspension aqueuse ayant un nombre K (mesuré à 25°C dans la cyclohexanone à raison de 5g/l) égal à 68 (PVC-S) (exemple 6R)

La charge renforçante est identique à celle mise en oeuvre dans les exemples 1 à 3R.

Les compositions préparées et évaluées dans les exemples 4 à 6R sont les suivantes, les teneurs étant exprimées en poids :

|  | Exemple 4 | Exemple 5 | Exemple 6R |
|---|---|---|---|
| Constituants polymériques | | | |
| Polymères (a) | 9,5 | 24 | 14,7 |
| Polymère (b) | 70,5 | 56 | |
| Polymères (c) : PVC-E | 20 | 20 | 20 |
| PVC-S | | | 65,3 |
| Charge renforçante (d) : | 6,25 | 6,25 | 6,25 |
| Ingrédients de mise en oeuvre : identiques en nature et en quantité à ceux mis en oeuvre dans les exemples 1 à 3R. | | | |

Des prémélanges ont été préparés dans un mélangeur rapide, puis gélifiés sur une compondeuse à vis corotatives (diamètre 30 mm) au débit de 50kg/h avec un profil de températures : 60°C-90°C-180°C-180°C. A la sortie de l'étage double vis, la matière est reprise par une monovis qui assure sa mise en pression et son passage au travers de la filière de granulation. Au départ des granules ainsi obtenus, on a extrudé des profilés sur machine double-vis à vis coniques, dont le potentiel de malaxage est plus élevé que celui des vis coniques mises en oeuvre aux exemples 1 à 3R, avec le profil de températures suivant :

- fourreau 160°C-155°C-150°C
- raccord 160°C
- plaque à trous 165°C
- tête 165°C
- filière 185°C
- conditionnement vis 100°C

Sur des éprouvettes de 3 mm d'épaisseur, prélevées dans la face extérieure des profilés, on a évalué la résilience Charpy avec simple entaille en V selon la norme BS 2782 méthode 359 (pour PVC modifié) avec un rayon d'entaille de 0,1 mm tel que spécifié dans la norme BS 7413. Les résultats y compris l'écart-type mesuré sur 10 éprouvettes figurent ci-dessous.

|  | Exemple 4 | Exemple 5 | Exemple 6R |
|---|---|---|---|
| Résilience Charpy simple entaille en V selon norme | | | |
| BS 7413, kJ/m$^2$ | 14,7** | 14,4** | 12,3** |
| Ecart-type (kJ/m$^2$) | 2,2 | 1,9 | 2 |

** Ruptures exclusivement fragiles

La comparaison des résultats des exemples selon l'invention 4 et 5 avec ceux de l'exemple comparatif 6R, tous à teneur globale identique en agent(s) renforçant(s), montre la supériorité des compositions selon l'invention dans des conditions d'extrusion critiques sur le plan de la résilience.

TABLEAU I

|  | Ex. 1 | Ex. 2R | Ex. 3R |
|---|---|---|---|
| Résilience Charpy simple entaille en U selon norme | | | |
| DIN 53453 (kJ/m$^2$) | 48 | 32 | 33 |
| Ecart-type (kJ/m$^2$) | 7.5 | 12.3 | 13.6 |
| Résilience Charpy double entaille en V selon norme | | | |
| DIN 53753 (kJ/m$^2$) | 52 | 38 | 45 |
| Ecart-type (kJ/m$^2$) | 3,5 | 9.6 | 8.6 |

TABLEAU I (suite)

| Résilience Charpy simple entaille en V selon norme | | | |
|---|---|---|---|
| BS 7413, kJ/m$^2$ | * | 7.15** | 8.40** |
| Ecart-type (kJ/m$^2$) | | 0.7 | 0.7 |
| * Ruptures exclusivement ductiles | | | |
| ** Ruptures exclusivement fragiles | | | |
| Résistance des assemblages soudés en traction statique (MPa) | | | |
| température de soudage = 265°C | 53 | 55 | 53 |
| température de soudage = 245°C | 49 | 30 | 29 |

## Revendications

1. Compositions résistant aux chocs à base de polymères du chlorure de vinyle, caractérisées en ce qu'elles comprennent à titre de polymères du chlorure de vinyle :

   (a) de 3 à 40 parties de copolymère greffé de chlorure de vinyle sur du polyacrylate de butyle faiblement réticulé contenant de 12 à 45 % en poids de polyacrylate de butyle faiblement réticulé obtenu par mise en oeuvre à la polymérisation d'au moins 0,2 % et de pas plus de 3 % en poids par rapport à l'acrylate de butyle d'un comonomère comprenant plusieurs insaturations éthyléniques,
   (b) de 5 à 85 parties de copolymère greffé de chlorure de vinyle sur un copolymère d'éthylène et d'acétate de vinyle contenant de 0,5 à 7 % en poids de copolymère d'éthylène et d'acétate de vinyle contenant de 50 à 80 % en poids d'éthylène et dont la viscosité intrinsèque, mesurée à 20°C dans le m-xylène, est comprise entre 0,05 et 0,10 l/g,
   (c) de 10 à 85 parties de polymère non modifié du chlorure de vinyle
   pour 100 parties en poids au total de l'ensemble des polymères du chlorure de vinyle de la composition, et, à titre de charge renforçante ;
   (d) de 3 à 10 parties de carbonate de calcium enrobé dont les particules élémentaires ont un diamètre moyen inférieur à 1 μm pour 100 parties en poids de l'ensemble des polymères du chlorure de vinyle de la composition.

2. Compositions résistant aux chocs selon la revendication 1, caractérisées en ce que le polymère du chlorure de vinyle (a) contient de 25 à 40 % en poids de polyacrylate de butyle faiblement réticulé.

3. Compositions résistant aux chocs selon la revendication 1, caractérisées en ce que le polymère du chlorure de vinyle (b) contient de 1,5 à 5 % en poids de copolymère d'éthylène et d'acétate de vinyle.

4. Compositions résistant aux chocs selon la revendication 1, caractérisées en ce que le polymère du chlorure de vinyle (c) est constitué d'un homopolymère du chlorure de vinyle.

5. Compositions résistant aux chocs selon l'une quelconque des revendications 1 à 4, caractérisées en ce qu'elles comprennent à titre de polymères du chlorure de vinyle :

   (a) de 5 à 25 parties de copolymère greffé de chlorure de vinyle sur du polyacrylate de butyle faiblement réticulé,
   (b) de 30 à 75 parties de copolymère greffé de chlorure de vinyle sur un copolymère d'éthylène et d'acétate de vinyle,
   (c) de 20 à 50 parties de polymère non modifié du chlorure de vinyle
   pour 100 parties en poids au total de l'ensemble des polymères du chlorure de vinyle de la composition, et, à titre de charge renforçante,
   (d) de 5 à 8 parties de carbonate de calcium enrobé pour 100 parties en poids de l'ensemble des polymères du chlorure de vinyle de la composition.

6. Compositions résistant aux chocs selon l'une quelconque des revendications 1 à 5, caractérisées en ce que la somme des teneurs en polyacrylate de butyle faiblement réticulé et en copolymère d'éthylène et d'acétate de vinyle est inférieure à 6 parties pour 100 parties en poids au total de l'ensemble des polymères du chlorure de vinyle de la composition.

7. Compositions résistant aux chocs selon l'une quelconque des revendications 1 à 5, caractérisées en ce que la somme des teneurs en polyacrylate de butyle faiblement réticulé et en copolymère d'éthylène et d'acétate de vinyle est supérieure à 2 parties pour 100 parties en poids au total de l'ensemble des polymères du chlorure de vinyle de la composition.

8. Compositions résistant aux chocs selon l'une quelconque des revendications 1 à 7, caractérisées en ce que la teneur en polyacrylate de butyle faiblement réticulé s'élève à 1,5 partie au moins et la teneur en copolymère d'éthylène et d'acétate de vinyle à 0,25 partie au moins, la somme des teneurs en polyacrylate de butyle faiblement réticulé et en copolymère d'éthylène et d'acétate de vinyle ne dépassant pas 4,5 parties en poids pour 100 parties en poids au total de l'ensemble des polymères du chlorure de vinyle de la composition.

9. Utilisation des compositions selon l'une quelconque des revendications 1 à 8 pour l'extrusion de profilés.

10. Utilisation selon la revendication 9 pour l'extrusion de profilés pour châssis à usage extérieur.

**Claims**

1. Impact-resistant compositions based on vinyl chloride polymers, characterised in that they comprise, as vinyl chloride polymers:

   (a) from 3 to 40 parts of vinyl chloride graft copolymer on weakly crosslinked polybutyl acrylate containing from 12 to 45 % by weight of weakly crosslinked polybutyl acrylate obtained by using in the polymerisation at least 0,2 % and no more than 3 % by weight relative to the butyl acrylate of a comonomer containing a number of ethylenic unsaturations,
   (b) from 5 to 85 parts of vinyl chloride graft copolymer on a copolymer of ethylene and vinyl acetate, containing from 0.5 to 7 % by weight of copolymer of ethylene and vinyl acetate containing from 50 to 80 % by weight of ethylene and whose intrinsic viscosity, measured at 20°C in m-xylene, is between 0.05 and 0.10 l/g,
   (c) from 10 to 85 parts of unmodified vinyl chloride polymer
   per 100 parts by weight in all of the combination of the vinyl chloride polymers of the composition and, by way of reinforcing filler:
   (d) from 3 to 10 parts of coated calcium carbonate whose elementary particles have a mean diameter smaller than 1 μm per 100 parts by weight of the combination of the vinyl chloride polymers of the composition.

2. Impact-resistant compositions according to Claim 1, characterised in that the vinyl chloride polymer (a) contains from 25 to 40 % by weight of weakly crosslinked polybutyl acrylate.

3. Impact-resistant compositions according to Claim 1, characterised in that the vinyl chloride polymer (b) contains from 1.5 to 5 % by weight of copolymer of ethylene and vinyl acetate.

4. Impact-resistant compositions according to Claim 1, characterised in that the vinyl chloride polymer (c) consists of a vinyl chloride homopolymer.

5. Impact-resistant compositions according to any one of Claims 1 to 4, characterised in that they comprise, as vinyl chloride polymers:

   (a) from 5 to 25 parts of vinyl chloride graft copolymer on weakly crosslinked polybutyl acrylate,
   (b) from 30 to 75 parts of vinyl chloride graft copolymer on a copolymer of ethylene and vinyl acetate,
   (c) from 20 to 50 parts of unmodified vinyl chloride polymer
   per 100 parts by weight in all of the combination of the vinyl chloride polymers of the composition and, by way of reinforcing filler,
   (d) from 5 to 8 parts of coated calcium carbonate per 100 parts by weight of the combination of the vinyl chloride polymers of the composition.

6. Impact-resistant compositions according to any one of Claims 1 to 5, characterised in that the sum of the contents of weakly crosslinked polybutyl acrylate and of copolymer of ethylene and vinyl acetate is smaller than 6 parts per 100 parts by weight in all of the combination of the vinyl chloride polymers of the composition.

7. Impact-resistant compositions according to any one of Claims 1 to 5, characterised in that the sum of the contents of weakly crosslinked polybutyl acrylate and of copolymer of ethylene and vinyl acetate is greater than 2 parts per 100 parts by weight in all of the combination of the vinyl chloride polymers of the composition.

8. Impact-resistant compositions according to any one of Claims 1 to 7, characterised in that the content of weakly crosslinked polybutyl acrylate is at least 1.5 parts and the content of copolymer of ethylene and vinyl acetate at least 0.25 parts, the sum of the contents of weakly crosslinked polybutyl acrylate and of copolymer of ethylene and vinyl acetate not exceeding 4.5 parts by weight per 100 parts by weight in all of the combination of the vinyl chloride polymers of the composition.

9. Use of the compositions according to any one of Claims 1 to 8 for the extrusion of sections.

10. Use according to Claim 9 for the extrusion of sections for supporting frames for outdoor use.


**Patentansprüche**

1. Schlagfeste Zusammensetzungen auf der Basis von Vinylchloridpolymeren, dadurch gekennzeichnet, daß sie als Vinylchloridpolymere umfassen:

(a) 3 bis 40 Teile Pfropfcopolymer von Vinylchlorid auf schwach vernetztem Polybutylacrylat, das 12 bis 45 Gew.-% schwach vernetztes Polybutylacrylat enthält, welches durch Verwendung, bei der Polymerisation, von wenigstens 0,2 Gew.-% und von nicht mehr als 3 Gew.-%, bezogen auf das Butylacrylat, eines mehrfach ethylenisch ungesättigten Comonomers erhalten wird,
(b) 5 bis 85 Teile Pfropfcopolymer von Vinylchlorid auf einem Ethylen-Vinylacetat-Copolymer, das 0,5 bis 7 Gew.-% Ethylen-Vinylacetat-Copolymer enthält, welches 50 bis 80 Gew.-% Ethylen enthält, und dessen Grenzviskosität, gemessen bei 20 °C in m-Xylol, zwischen 0,05 und 0,10 l/g liegt,
(c) 10 bis 85 Teile nicht modifiziertes Vinylchloridpolymer,
pro 100 Teile Gesamtgewicht aller Vinylchloridpolymere der Zusammensetzung, und als Verstärkungsfüllstoff:
(d) 3 bis 10 Teile umhülltes Calciumcarbonat, dessen Elementarteilchen einen mittleren Durchmesser kleiner als 1 µm besitzen, pro 100 Gewichtsteile aller Vinylchloridpolymere der Zusammensetzung.

2. Schlagfeste Zusammensetzungen gemäß Anspruch 1, dadurch gekennzeichnet, daß das Vinylchloridpolymer (a) 25 bis 40 Gew.-% schwach vernetztes Polybutylacrylat enthält.

3. Schlagfeste Zusammensetzungen gemäß Anspruch 1, dadurch gekennzeichnet, daß das Vinylchloridpolymer (b) 1,5 bis 5 Gew.-% Ethylen-Vinylacetat-Copolymer enthält.

4. Schlagfeste Zusammensetzungen gemäß Anspruch 1, dadurch gekennzeichnet, daß das Vinylchloridpolymer (c) aus einem Vinylchloridhomopolymer besteht.

5. Schlagfeste Zusammensetzungen gemäß einem der Ansprüche 1 bis 4, dadurch gekennzeichnet, daß sie als Vinylchloridpolymere umfassen:

(a) 5 bis 25 Teile Pfropfcopolymer von Vinylchlorid auf schwach vernetztem Polybutylacrylat,
(b) 30 bis 75 Teile Pfropfcopolymer von Vinylchlorid auf einem Ethylen-Vinylacetat-Copolymer,
(c) 20 bis 50 Teile nicht modifiziertes Vinylchloridpolymer

pro 100 Teile Gesamtgewicht aller Vinylchloridpolymere der Zusammensetzung, und als Verstärkungsfüllstoff,
(d) 5 bis 8 Teile umhülltes Calciumcarbonat pro 100 Gewichtsteile aller Vinylchloridpolymere der Zusammensetzung.

6. Schlagfeste Zusammensetzungen gemäß einem der Ansprüche 1 bis 5, dadurch gekennzeichnet, daß die Summe der Gehalte an schwach vernetztem Polybutylacrylat und an Ethylen-Vinylacetat-Copolymer kleiner als 6 Teile pro 100 Teile Gesamtgewicht aller Vinylchloridpolymere der Zusammensetzung ist.

7. Schlagfeste Zusammensetzungen gemäß einem der Ansprüche 1 bis 5, dadurch gekennzeichnet, daß die Summe der Gehalte an schwach vernetztem Polybutylacrylat und an Ethylen-Vinylacetat-Copolymer größer als 2 Teile pro 100 Teile Gesamtgewicht aller Vinylchloridpolymere der Zusammensetzung ist.

8. Schlagfeste Zusammensetzungen gemäß einem der Ansprüche 1 bis 7, dadurch gekennzeichnet, daß der Gehalt an schwach vernetztem Polybutylacrylat wenigstens 1,5 Teile und der Gehalt an Ethylen-Vinylacetat-Copolymer wenigstens 0,25 Teil beträgt, wobei die Summe der Gehalte an schwach vernetztem Polybutylacrylat und an Ethylen-Vinylacetat-Copolymer 4,5 Gewichtsteile pro 100 Teile Gesamtgewicht aller Vinylchloridpolymere der Zusammensetzung nicht übersteigt.

9. Verwendung der Zusammensetzungen gemäß einem der Ansprüche 1 bis 8 für die Extrusion von Profilen.

10. Verwendung gemäß Anspruch 9 für die Extrusion von draußen verwendbaren Rahmenprofilen.